# FASCICULE DE BREVET EUROPEEN

(11) **EP 1 561 049 B1**
(45) Date de publication et mention de la délivrance du brevet: **30.06.2010**
(21) Numéro de dépôt: 03782540.3
(22) Date de dépôt: 10.11.2003
(51) Int. Cl.: F16G 11/00, B63B 21/04

(54) **DISPOSITIF D'ANCRAGE SUR PAROI POUR LA FIXATION D'ELEMENTS DE NATURE QUELCONQUE**
VORRICHTUNG ZUR VERANKERUNG VON BELIEBIGEN ELEMEMTEN AN EINER WAND
ANCHORING DEVICE FOR FIXING ELEMENTS OF A PARTICULAR TYPE ON A FLAT SURFACE

(30) Priorité: 13.11.2002 FR 0214146
(43) Date de publication de la demande: 10.08.2005
(73) Titulaire: FR Nautisme, 56100 Lorient (FR)
(72) Inventeur: ROBERT, François, FR-56860 Sène (FR)
(74) Mandataire: Laget, Jean-Loup
(86) Numéro de dépôt international: PCT/FR2003/003346
(87) Numéro de publication internationale: WO 2004/046581

(56) Documents cités:
- EP-A- 1 053 933
- WO-A-01/42682
- DE-C- 353 518
- US-A- 3 122 120
- US-A- 5 887 840
- US-A- 6 000 107
- US-B1- 6 389 659

## Description

La présente invention concerne un dispositif d'ancrage sur paroi pour la fixation d'éléments de nature quelconque, de préférence soumis à tension, tels que hauban, élément de gréement, câble, pièce d'accastillage diverse ou autre.

Les dispositifs d'ancrage utilisés à ce jour, en particulier dans le domaine du nautisme pour la fixation de poulie, d'éléments de gréement, de hauban, de câble ou autre sont des dispositifs d'une masse élevée comparativement à la résistance mécanique qu'ils peuvent offrir.

Un dispositif d'ancrage connu est notamment constitué d'une plaque et d'une contreplaque disposées de part et d'autre de la paroi du pont et assemblées par vissage. La plaque est surmontée d'un anneau d'ancrage rigide. Un tel dispositif d'ancrage nécessite deux personnes pour son installation et oblige à un grand nombre de perçages dans le pont, ce qui n'est jamais satisfaisant sur le plan de la résistance mécanique du pont. Par ailleurs, la présence d'un anneau d'ancrage rigide limite les possibilités de fixation de l'élément raccordé et ne permet pas une orientation sur 360°.

On connaît par ailleurs, à travers les brevets EP-1.053.933 et WO/01.42682, des dispositifs d'ancrage dans lesquels l'anneau d'ancrage est désolidarisable du reste du dispositif de telle sorte que la résistance à la traction est limitée.

D'autres dispositifs d'ancrage, tels que ceux décrits dans les brevets américains US-A-3.122.120, US-A-6.389.659, US-A-5.887.840 et US-A-6.000.107 présentent des constructions complexes qui ne donnent pas à ce jour entière satisfaction.

Un but de la présente invention est de proposer un dispositif d'ancrage apte à travailler sur 360° en couvrant le volume délimité par une demi-sphère, la conception de ce dispositif nécessitant une seule perforation de la paroi de réception du dispositif pour son montage et autorisant un montage rapide par une seule personne d'un tel dispositif.

Un autre but de la présente invention est de proposer un dispositif d'ancrage dont la conception facilite son démontage et permet son application sur des supports de profil quelconque.

A cet effet, l'invention a pour objet un dispositif d'ancrage sur paroi pour la fixation d'éléments de nature quelconque, de préférence soumis à tension, tels que hauban, élément de gréement, câble, caractérisé en ce que le dispositif se présente sous forme de deux platines solidaires, l'une de ces platines, généralement destinée à s'appliquer sur la face interne d'une paroi, étant solidarisée à une douille susceptible d'être positionnée en regard d'un perçage de ladite paroi, cette douille contenant un faisceau de fibres flexibles épanouies à une extrémité pour former au moins une nappe enserrée entre les deux platines, le faisceau de fibres faisant saillie hors de la douille pour servir de point d'ancrage à un élément de nature quelconque raccordé au faisceau.

La conception du dispositif d'ancrage précité permet l'obtention d'un temps de montage et de remplacement extrêmement court, ces opérations pouvant s'effectuer par une seule personne. Par ailleurs, le point d'ancrage des éléments à raccorder se présentant sous forme d'un faisceau de fibres, il est possible de travailler sur une orientation s'étendant sur 360° dans un volume correspondant à une demi-sphère.

Enfin, le dispositif retenu peut présenter un poids extrêmement faible, de l'ordre de 140 g, tout en offrant une résistance à la traction voisine de 13 tonnes.

L'invention sera bien comprise à la lecture de la description suivante d'exemples de réalisation, en référence aux dessins annexés dans lesquels :

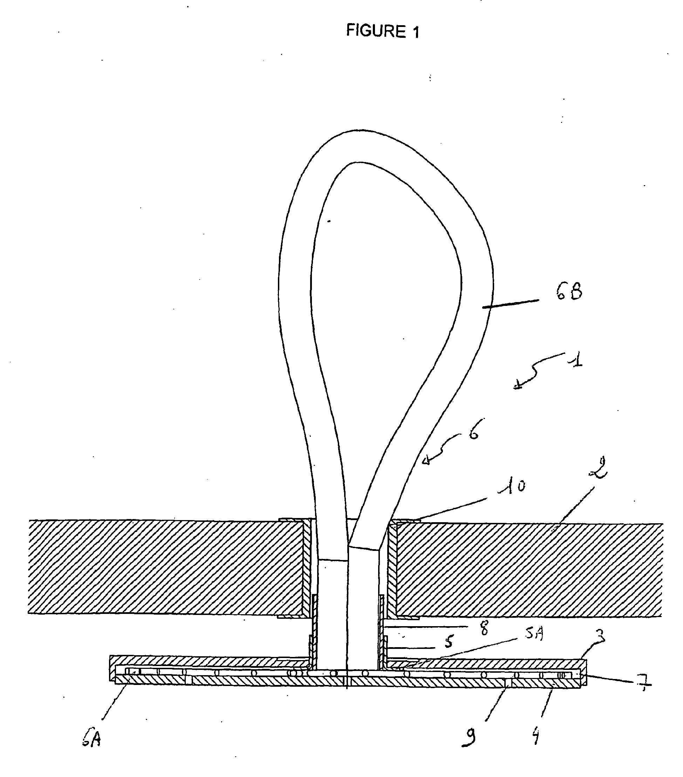

la figure 1 représente une vue en coupe d'un dispositif d'ancrage en cours d'installation sur une paroi telle que la paroi d'un pont de bateau ;
la figure 2 représente une vue en perspective du dispositif à l'état éclaté des éléments le constituant;
la figure 3 représente une vue en coupe d'un autre mode de réalisation du dispositif ;
la figure 4 représente une vue en coupe d'un autre mode de réalisation d'un dispositif d'ancrage à l'état monté sur une paroi telle que la paroi d'un pont de bateau et
la figure 5 représente une vue en coupe du dispositif de la figure 4 à l'état éclaté des éléments le constituant.

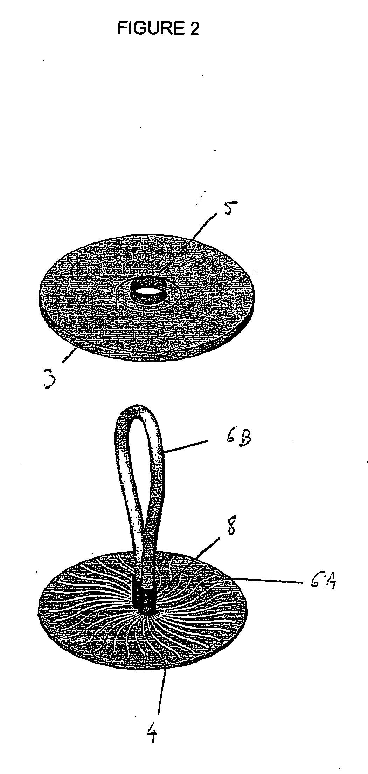

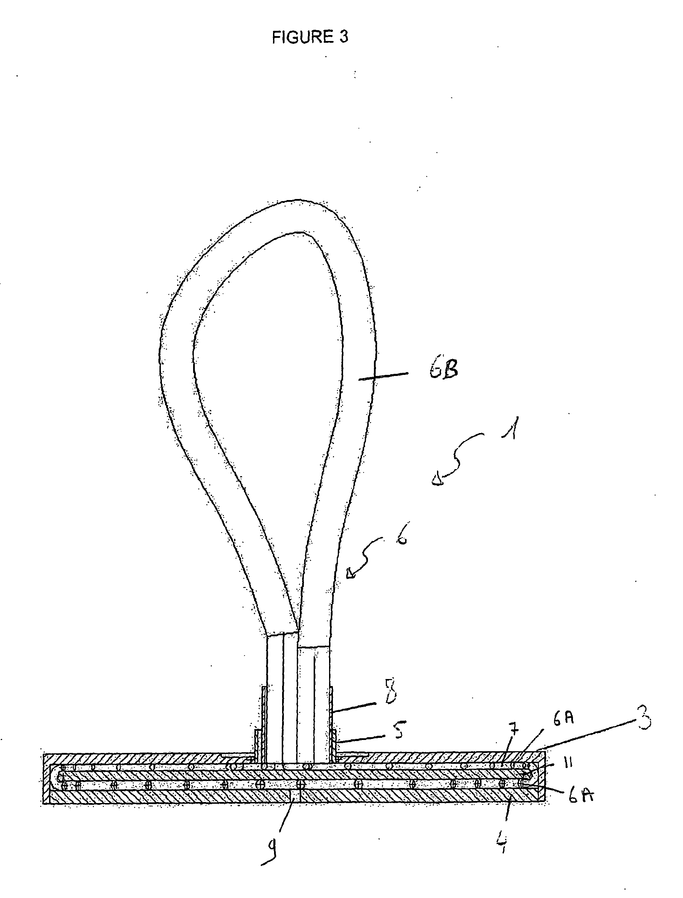

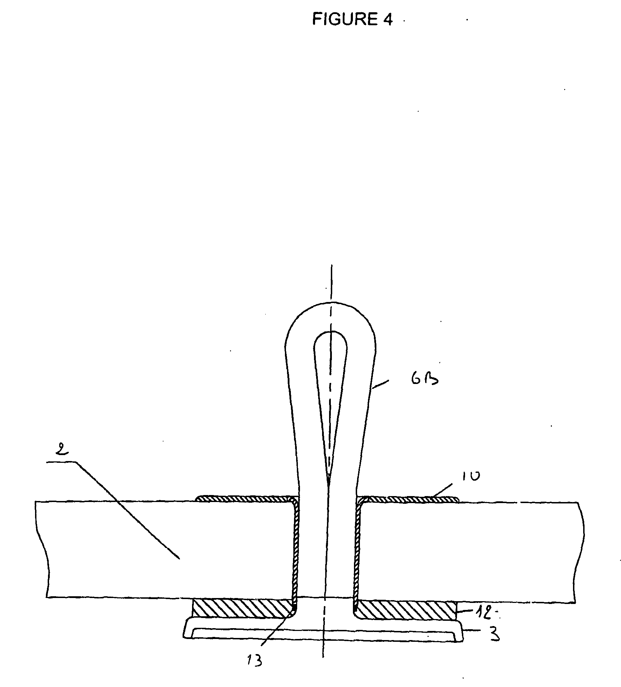

Comme mentionné ci-dessus, le dispositif 1 d'ancrage, objet de l'invention, est de préférence destiné à s'insérer à travers un perçage d'une paroi 2 telle que la paroi d'un pont, la simple application sur une paroi ne pouvant être exclue. Ce dispositif 1 d'ancrage permet la fixation d'éléments de nature quelconque, généralement soumis à tension, tels que hauban, élément de gréement, câble. Ce dispositif 1 d'ancrage se présente sous forme de deux platines 3 et 4 solidaires. La platine 3, généralement destinée à s'appliquer sur la face interne d'une paroi 2, est solidarisée à une douille 5 cylindrique susceptible de traverser partiellement la paroi 2 par l'intermédiaire du perçage ménagé dans cette paroi. La douille 5 peut être réalisée d'une seule pièce avec la platine 3 d'application sur paroi (figures 3 et 4). De manière équivalente, douille 5 et platine 3 peuvent être réalisées sous forme de deux pièces séparées. Cette douille 5 contient un faisceau 6 de fibres flexibles épanouies à une extrémité sous une forme étoilée, comme l'illustre la figure 2, pour former une nappe 6A enserrée entre les deux platines 3 et 4. Le faisceau 6 de fibres fait par ailleurs saillie hors de la douille 5 pour servir de point d'ancrage à un élément de nature quelconque raccordé au faisceau 6.

Dans les exemples représentés, la platine 3 d'application sur la face interne d'une paroi 2 est une platine se présentant de préférence sous forme d'un stratifié en carbone. La platine 4, opposée à la platine 3 d'application sur paroi 2, se présente également de préférence sous forme d'un stratifié en carbone ou d'un stratifié en verre. Les fibres de la nappe 6A de fibre sont quant à elles disposées entre lesdites platines à disposition rayonnante par rapport à la douille 5. Cette disposition rayonnante peut être opérée au moyen d'un épanouissement des fibres réparties sur la totalité de la surface desdites platines comme l'illustre la figure 2 ou sur une partie de cette surface en fonction des applications. Les platines 3 et 4 et la nappe 6A de fibres sont solidarisées entre elles par un liant 7, tel qu'une résine polymérisable. Cette résine est de préférence une résine de type époxy ou de type méthacrylate. La platine 4 opposée à la platine 3 d'application sur paroi 2 peut comporter des orifices 9 de drainage pour l'évacuation du liant en excès lors de la solidarisation des platines 3 et 4 et de la nappe 6A de fibres. Grâce à ce montage, les fibres épanouies sont à la fois retenues par collage et par friction du fait du montage mécanique. Il en résulte une augmentation de la résistance mécanique de l'ensemble. La partie du faisceau 6 de fibres traversant la douille 5 est quant à elle maintenue à l'intérieur d'une gaine 8, de préférence thermorétractable. Cette gaine 8, logée à l'intérieur de la douille 5, est donc disposée coaxiale à la douille 5. La partie 6B saillante du faisceau 6 de fibres hors de la douille 5 affecte quant à elle la forme d'une boucle. Dans un mode de réalisation, non représenté, cette partie saillante aurait pu, de manière analogue, être constituée d'un faisceau mono brin, le raccordement pouvant s'effectuer par exemple avec l'élément à raccorder par l'intermédiaire d'une épissure. Généralement, ce faisceau de fibre se présente sous forme de fibres de préférence tressées. Toutefois, de manière analogue, un tel faisceau de fibres peut se présenter sous forme d'un faisceau de fibres non tressées. Ces fibres sont de préférence des fibres polyesters ou polyéthylène haut module.

La fabrication d'un tel dispositif d'ancrage peut s'effectuer comme suit. A partir d'un faisceau de fibres, de préférence en polyester ou polyéthylène haut module, il est créé une boucle par simple pliage dudit faisceau. Autour de la zone dans laquelle les brins du faisceau s'étendent de manière parallèle, il est monté une gaine 8, de préférence thermorétractable. Cette gaine est donc mise en place sur le faisceau de fibres enfilé à l'intérieur de ladite gaine 8 puis chauffée de manière à se rétracter. La présence de cette gaine 8 thermorétractable permet de figer les fibres du faisceau entre elles pour empêcher tout déséquilibrage des fibres qui sont ainsi positionnées toutes à la même longueur. Par ailleurs, une telle gaine permet d'éviter une migration du liant vers la partie saillante dudit faisceau lors de la solidarisation des platines entre elles. Une fois le faisceau de fibres ainsi préparé, il peut être incorporé dans une première pièce constituée de l'ensemble formé par la douille 5 mâle et de la platine 3 d'application sur paroi 2. La douille 5 mâle et la platine 3 sont réalisées d'une seule pièce ou ont été préalablement collées. A cet effet, la douille 5 est munie à sa base d'un épaulement 5A venant en appui contre la paroi interne de la platine 3 d'application sur la paroi 2. La douille 5 permet ainsi de protéger la platine 3 de carbone au niveau de son ouverture permettant le passage des fibres ainsi que les fibres elles-mêmes notamment au niveau de leur coudage. L'extrémité du faisceau de fibres est alors épanouie pour positionner les fibres dans une configuration conforme notamment à celle représentée à la figure 2. Un liant, tel qu'une résine de type époxy ou de type méthacrylate, est alors appliqué sur l'ensemble des fibres. Cette résine peut se présenter sous forme d'un film actif à une température généralement voisine de l'ordre de 80°C. Il peut être également utilisé un procédé de fabrication par voie humide. Une fois les fibres de faisceau épanouies et le liant introduit, il est alors pressé contre ladite nappe la platine 4 opposée à la platine 3 d'application sur la paroi 2. Les fibres épanouies s'étendent ainsi sous forme d'une nappe dans l'espace ménagé entre lesdites platines. La solidarisation des platines 3 et 4 peut alors s'effectuer. Cette solidarisation s'effectue généralement par mise sous vide du dispositif et élévation de température. Cette mise sous vide s'opère pendant une durée voisine de 5 heures. On observe alors un premier durcissement de la résine qui se polymérise à une température comprise entre 25°C et 80°C. Il peut alors être procédé à un recuit pour augmenter le module de résistance de la résine. On observe, du fait du mode de fabrication d'un tel dispositif d'ancrage et de la conception de ce dispositif; que la tenue des fibres s'effectue majoritairement par friction et non par collage. Le collage peut toutefois être amélioré par un traitement de surface des fibres. Une fois les platines solidarisées, le dispositif d'ancrage est prêt à être installé. La mise en place d'un dispositif d'ancrage s'effectue de manière extrêmement aisée. En effet, il suffit d'enfiler la douille 5 à l'intérieur d'un perçage de la paroi 2 éventuellement garni d'une douille 10 femelle pour permettre la mise en place d'un tel dispositif. Il en résulte qu'un tel dispositif est aisément amovible. Dans un mode de réalisation particulier de l'invention, la douille 5 peut être une douille filetée de manière à coopérer avec une douille 10 femelle taraudée logée dans un perçage de la paroi 2. Cette douille 10, dite femelle, est maintenue par sertissage dans le perçage de la paroi 2. La présence de cette douille 10 femelle permet d'éviter toute altération de la paroi 2 au niveau de sa zone de jonction avec le dispositif d'ancrage. En effet, à cet effet, la douille 10 femelle comporte à au moins l'une de ses extrémités un rebord venant à recouvrement sur la paroi.

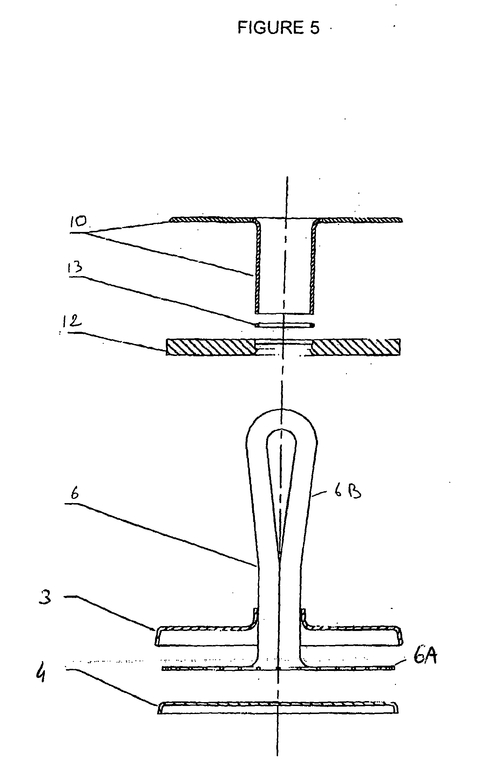

Dans un autre mode de réalisation de l'invention, représenté aux figures 4 et 5, la douille 5 est enfilée à l'intérieur d'un perçage de la paroi 2 dont le débouché, côté face interne de la paroi, est délimité par une platine 12 annulaire formant la face interne de la paroi contre laquelle la platine 3 d'application du dispositif s'applique. Ainsi, dans ce cas, la face interne de la paroi est aménagée pour recevoir le dispositif. Cette platine 12 annulaire est de préférence collée au reste de la paroi pour former un seul et même ensemble. La douille 10, enfilée à travers le perçage de la paroi 2, fait ainsi saillie à travers ladite platine 12 annulaire et permet son centrage par rapport au reste du perçage ménagé dans la paroi 2. Cette platine 12 annulaire est pourvue d'une gorge et/ou d'un épaulement annulaire servant à la réception d'un joint 13 torique positionné autour de la douille 5 de manière à obtenir un dispositif lié de manière étanche à la paroi 2. Il peut être également envisagé de coller l'une à l'autre les faces de la platine 3 et de la platine 12 en regard et en applique l'une contre l'autre. Il peut être également ménagé, dans la platine 12, un épaulement servant à la réception par simple emboîtement de l'extrémité de la douille 10 enfilée à travers le perçage de la paroi et faisant saillie dans l'évidement de la platine 12 annulaire. Le montage, conforme à celui représenté aux figures 4 et 5, sera plus particulièrement retenu dans le cas où il est nécessaire d'obtenir un montage étanche entre dispositif et paroi. Lors d'une défaillance du dispositif, il suffit de désolidariser la platine 3 de la platine 12 pour démonter le dispositif et procéder à son remplacement.

Indépendamment du mode de réalisation retenu, un tel montage peut être effectué par une seule et même personne. L'opération de montage ne dure que quelques minutes. Il en sera de même pour l'opération de démontage. Une fois le dispositif d'ancrage mis en place, l'extrémité saillante du faisceau de fibres peut alors être raccordée à un élément de nature quelconque. Du fait que l'élément de raccordement se présente sous forme d'un faisceau de fibres mono brin ou en forme de boucle, comme l'illustrent les figures, il en résulte une possibilité d'orientation de ce point d'ancrage sur 360°.

Dans un autre mode de réalisation représenté à la figure 3, une platine 11 supplémentaire est insérée entre les platines 3 et 4. Les fibres épanouies s'étendent sur une face de ladite platine 11 intermédiaire avant d'être rabattues contre l'autre face de ladite platine. Ainsi, les fibres enveloppent ladite platine 11 intermédiaire et forment deux nappes. Il en résulte un double coincement des fibres du faisceau et une augmentation de la surface de friction sans augmenter l'encombrement du dispositif.

## Revendications

1. Dispositif (1) d'ancrage sur paroi (2) pour la fixation d'éléments de nature quelconque, de préférence soumis à tension, tels que hauban, élément de gréement, câble,
**caractérisé en ce que** le dispositif se présente sous forme de deux platines (3, 4) solidaires, l'une (3) de ces platines (3, 4), généralement destinée à s'appliquer sur la face interne d'une paroi (2), étant solidarisée à une douille (5) susceptible d'être positionnée en regard d'un perçage de ladite paroi (2), cette douille (5) contenant un faisceau (6) de fibres flexibles épanouies à une extrémité pour former au moins une nappe (6A) enserrée entre les deux platines (3, 4), le faisceau (6) de fibres faisant saillie hors de la douille (5) pour servir de point d'ancrage à un élément de nature quelconque raccordé au faisceau (6).

2. Dispositif (1 ) d'ancrage selon la revendication 1,
**caractérisé en ce que** les platines (3, 4) et la nappe (6A) de fibres sont solidarisées entre elles par un liant (7), tel qu'une résine polymérisable.

3. Dispositif (1) d'ancrage selon l'une des revendications 1 et 2,
**caractérisé en ce que** la douille (5) et la platine (3) d'application sur paroi à laquelle la douille (5) est solidarisée sont réalisées d'une seule pièce.

4. Dispositif (1) d'ancrage selon l'une des revendications 1 à 3,
**caractérisé en ce qu'**il est prévu, entre les platines (3) et (4), une platine (11) supplémentaire, les fibres épanouies du faisceau de fibres s'étendant sur une face de ladite platine intermédiaire avant d'être rabattues contre l'autre face de ladite platine.

5. Dispositif (1) d'ancrage selon l'une des revendications 1 à 4,
**caractérisé en ce que** la partie du faisceau (6) traversant la douille (5) est maintenue à l'intérieur d'une gaine (8), de préférence thermorétractable.

6. Dispositif (1) d'ancrage selon l'une des revendications 1 à 5,
**caractérisé en ce que** la partie (6B) saillante du faisceau (6) de fibres hors de la douille (5) affecte la forme d'une boucle.

7. Dispositif (1 ) d'ancrage sur paroi (2) selon l'une des revendications 1 à 6, du type dans lequel la douille (5) est destinée à être enfilée à l'intérieur d'un perçage de ladite paroi (2) garni d'une douille (10) femelle taraudée pour rendre le dispositif aisément amovible, **caractérisé en ce que** la douille (5) est filetée.

8. Dispositif (1) d'ancrage sur paroi (2) selon l'une des revendications 1 à 7, du type dans lequel la douille (5) est destinée à être enfilée à l'intérieur d'un perçage de la paroi (2) dont le débouché, côté face interne de la paroi, est délimité par une platine (12) annulaire, cette platine (12) annulaire pourvue d'une gorge et/ou d'un épaulement annulaire formant la face interne de la paroi contre laquelle l'une des platines (3) du dispositif s'applique, **caractérisé en ce que** la douille (5) est munie d'un joint (13) torique positionné autour de la douille (5), ce joint (13) étant apte à être reçu dans la gorge et/ou l'épaulement annulaire de la platine (12) à l'état lié de manière étanche du dispositif à la paroi (2).

## Claims

1. An anchoring device (1) for fixing elements of a particular type on a flat surface (2), preferably tensioned, such as shrouds, riggings, cable,
**characterized in that** the device is in the form of two mutually secured plates (3, 4), one (3) of said plates (3, 4), generally designed to be pressed on the inner surface of a flat surface (2), being integral with a socket (5) capable of being positioned opposite a perforation of said flat surface (2), said socket (5) containing a bundle of flexible fibers (6) flared at one end to form at least one layer (6A) enclosed between the two plates (3, 4), the bundle of fibers (6) projecting outside the socket (5) to act as anchoring point to an element of a particular type connected to the bundle (6).

2. The anchoring device (1) according to claim 1,
**characterized in that** the plates (3, 4) and the layer (6A) of fibers are made integral with each other by a binder (7), such as a polymerizable resin.

3. The anchoring device (1) according to one of claims 1 and 2,
**characterized in that** the socket (5) and the plate (3) pressed on the flat surface (2) with which the socket (5) is integral are made in a single piece.

4. The anchoring device (1) according to one of claims 1 to 3,
**characterized in that**, between the plates (3) and (4), is provided an additional plate (11), the flared fibers of the bundle of fibers extending over one surface of said intermediate plate before being brought back against the other surface of said plate.

5. The anchoring device (1) according to one of claims 1 to 4,
**characterized in that** the portion of the bundle (6) passing through the socket (5) is maintained inside a sheath (8), which is preferably thermoshrinkable.

6. The anchoring device (1) according to one of claims 1 to 5,
**characterized in that** the portion (6B) of the bundle (6) of fibers projecting outside the socket (5) assumes the form of a loop.

7. The anchoring device (1) on a flat surface (2) according to one of claims 1 to 6, of the type in which the socket (5) is designed to be slipped inside a bore of said flat surface (2) provided with a tapped female socket (10) to make the device easily removable, **characterized in that** the socket (5) is threaded.

8. The anchoring device (1) on a flat surface (2) according to one of claims 1 to 7, of the type in which the socket (5) is designed to be slipped inside a bore of the flat surface (2) whereof the opening, on the side of the inner surface of the flat surface, is defined by an annular plate (12), this annular plate (12) provided with a groove and/or an annular shoulder forming the inner surface of the flat surface against which one of the plates (3) of the device is pressed, **characterized in that** the socket (5) is provided with an O-ring (13) positioned around the socket (5), this ring (13) being capable of being received in the groove and/or annular shoulder of the plate (12) in the state of the device sealably bound to the flat surface (2).

## Patentansprüche

1. Vorrichtung (1) zum Verankern an einer Wand (2) zur Befestigung von beliebigen Elementen, die bevorzugt gespannt sind, wie etwa Wanten, Takelung, Kabel,
**dadurch gekennzeichnet, dass** die Vorrichtung in Form von zwei fest verbundenen Platten (3, 4) vorliegt, wobei die eine (3) dieser Platten (3, 4), die im Allgemeinen dazu gedacht ist, an der Innenseite einer Wand (2) anzuliegen, wobei sie mit einer Hülse (5) fest verbunden ist, die gegenüber einer Bohrung der Wand (2) positioniert werden kann, wobei diese Hülse (5) ein Bündel (6) von biegsamen Fasern enthält, die an einem Ende aufgeweitet sind, um mindestens ein Gelege (6A) zu bilden, das zwischen den beiden Platten (3, 4) eingeklemmt ist, wobei das Faserbündel (6) aus der Hülse (5) vorsteht, um als Ankerpunkt für ein beliebiges Element zu dienen, das mit dem Bündel (6) verbunden ist.

2. Verankerungsvorrichtung (1) nach Anspruch 1, **dadurch gekennzeichnet, dass** die Platten (3, 4) und das Fasergelege (6A) durch ein Bindemittel (7) wie etwa ein polymerisierbares Harz, miteinander fest verbunden sind.

3. Verankerungsvorrichtung (1) nach einem der Ansprüche 1 und 2, **dadurch gekennzeichnet, dass** die Hülse (5) und die Platte (3) zum Anlegen an die Wand, mit der die Hülse (5) fest verbunden ist, einstückig ausgebildet sind.

4. Verankerungsvorrichtung (1) nach einem der Ansprüche 1 bis 3, **dadurch gekennzeichnet, dass** zwischen den Platten (3) und (4) eine zusätzliche Platte (11) bereitgestellt wird, wobei sich die aufgeweiteten Fasern des Faserbündels auf einer Seite der Zwischenplatte erstrecken, bevor sie an die andere Seite der Platte umgeschlagen werden.

5. Verankerungsvorrichtung (1) nach einem der Ansprüche 1 bis 4, **dadurch gekennzeichnet, dass** der Teil des Bündels (6), der durch die Hülse (5) geht, im Innern einer bevorzugt aufschrumpfbaren Ummantelung (8) gehalten wird.

6. Verankerungsvorrichtung (1) nach einem der Ansprüche 1 bis 5, **dadurch gekennzeichnet, dass** der aus der Hülse (5) vorstehende Teil (6B) des Faserbündels (6) die Form einer Öse annimmt.

7. Vorrichtung (1) zum Verankern an einer Wand (2) nach einem der Ansprüche 1 bis 6, von der Art, bei der die Hülse (5) dazu gedacht ist, in das Innere einer Bohrung der Wand (2) eingeschoben zu werden, die mit einer Hülse (10) mit Innengewinde ausgestattet ist, um die Vorrichtung leicht abnehmbar zu machen, **dadurch gekennzeichnet, dass** die Hülse (5) mit einem Gewinde versehen ist.

8. Vorrichtung (1) zum Verankern an einer Wand (2) nach einem der Ansprüche 1 bis 7, von der Art, bei der die Hülse (5) dazu gedacht ist, in das Innere einer Bohrung der Wand (2) eingeschoben zu werden, deren Mündung auf der Innenseite der Wand von einer ringförmigen Platte (12) begrenzt wird, wobei diese ringförmige Platte (12) mit einer ringförmigen Auskehlung und/oder Schulter versehen ist, welche die Innenseite der Wand bildet, an der eine der Platten (3) der Vorrichtung anliegt, **dadurch gekennzeichnet, dass** die Hülse (5) mit einem O-Ring (13) ausgestattet ist, der um die Hülse (5) herum positioniert ist, wobei diese Dichtung (13) dazu geeignet ist, um in der ringförmigen Auskehlung und/oder Schulter der Platte (12) aufgenommen zu werden, in dem Zustand, in dem die Vorrichtung mit der Wand (2) abdichtend verbunden ist.
